(19) Europäisches Patentamt
European Patent Office
Office européen des brevets

(11) **EP 4 265 779 A1**

(12) **EUROPEAN PATENT APPLICATION**
published in accordance with Art. 153(4) EPC

(43) Date of publication:
**25.10.2023 Bulletin 2023/43**

(51) International Patent Classification (IPC):
**C22C 38/34** (2006.01)    **C22C 38/06** (2006.01)
**C22C 38/20** (2006.01)    **C22C 38/00** (2006.01)
**C22C 38/28** (2006.01)    **C22C 38/26** (2006.01)
**C22C 38/22** (2006.01)    **C21D 8/12** (2006.01)

(21) Application number: **21911404.8**

(22) Date of filing: **16.12.2021**

(52) Cooperative Patent Classification (CPC):
**C21D 8/12; C22C 38/00; C22C 38/06; C22C 38/20;
C22C 38/22; C22C 38/26; C22C 38/28;
C22C 38/34; H01F 1/147;** Y02T 10/64

(86) International application number:
**PCT/KR2021/019225**

(87) International publication number:
**WO 2022/139337 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020  KR 20200179378**

(71) Applicant: **POSCO Co., Ltd
Pohang-si, Gyeongsangbuk-do 37859 (KR)**

(72) Inventors:
• **LEE, Hunju
  Pohang-si, Gyeongsangbuk-do 37859 (KR)**
• **KOO, Jooyoung
  Pohang-si, Gyeongsangbuk-do 37859 (KR)**
• **KIM, Seungil
  Pohang-si, Gyeongsangbuk-do 37859 (KR)**
• **KIM, Wonjin
  Pohang-si, Gyeongsangbuk-do 37859 (KR)**

(74) Representative: **Meissner Bolte Partnerschaft
mbB
Patentanwälte Rechtsanwälte
Postfach 86 06 24
81633 München (DE)**

(54) **NON-ORIENTED ELECTRICAL STEEL SHEET AND METHOD FOR MANUFACTURING SAME**

(57)    A non-oriented electrical steel sheet, according to one embodiment of the present invention includes, by weight%, Si: 3.0 to 4.0%, Al: 0.3 to 1.5%, Mn: 0.1 to 0.6%, at least one from among Sn and Sb: 0.006 to 0.1%, C: 0.0015 to 0.0040%, Cr: 0.01 to 0.03%, Cu: 0.003 to 0.008%, Mg: 0.0005 to 0.0025%, and a balance of Fe and inevitable impurities.

【Figure 1】

## Description

### [Technical Field]

One embodiment of the present invention relates to a non-oriented electrical steel sheet and a method for manufacturing the same. Specifically, one embodiment of the present invention relates to a non-oriented electrical steel sheet with improved magnetic properties by appropriately adjusting the contents of Sb, Sn, Cu, Cr, and Mg, and a method for manufacturing the same.

### [Background Art]

A non-oriented electrical steel sheet is mainly used in motors that convert electrical energy into mechanical energy, and requires excellent magnetic properties of the non-oriented electrical steel sheet to exhibit high efficiency in this process. In particular, as eco-friendly technology has attracted attention in recent years, it is considered very important to increase the efficiency of motors, which account for the majority of the total electrical energy consumption, and to this end, the demand for a non-oriented electrical steel sheet having excellent magnetic properties is also increasing.

The magnetic properties of the non-oriented electrical steel sheet are mainly evaluated by iron loss and magnetic flux density. The iron loss means energy loss that occurs at specific magnetic flux density and frequency, and the magnetic flux density means the degree of magnetization obtained under a specific magnetic field. The lower the iron loss, the more energy-efficient motors may be manufactured under the same conditions, and since the higher the magnetic flux density, the smaller the motor or the lower the copper loss, it is important to manufacture a non-oriented electrical steel sheet with low core loss and high magnetic flux density.

The characteristics of the non-oriented electrical steel sheet to be considered according to an operating condition of the motor also vary. As a criterion for evaluating the characteristics of the non-oriented electrical steel sheet used in a motor, W15/50, which is iron loss when a 1.5 T magnetic field is applied at a commercial frequency of 50 Hz, has been widely used for a plurality of motors. However, for all motors for various uses, it is not considered that W15/50 iron loss is the most important, and depending on a main operating condition, iron loss at different frequencies or applied magnetic fields is evaluated according to a main operating condition. Particularly, in non-oriented electrical steel sheets used in recent electric vehicle drive motors, since magnetic properties are often important at low magnetic fields of 1.0 T or less and high frequencies of 400 Hz or more, the characteristics of the non-oriented electrical steel sheets are evaluated with iron loss such as W10/400.

A method commonly used to increase the magnetic properties of the non-oriented electrical steel sheet is to add alloy elements of Si and the like. Through the addition of these alloy elements, the resistivity of the steel may be increased, but as the resistivity increases, the eddy current loss decreases, so that the total iron loss may be lowered. On the other hand, as the Si added amount increases, there is a disadvantage that the magnetic flux density deteriorates and brittleness increases, and when a certain amount or more is added, cold rolling becomes impossible, thereby making commercial production impossible. In particular, as the thickness of the electrical steel sheet is decreased, the effect of reducing the iron loss may be exhibited, but the deterioration in rollability due to brittleness becomes a fatal problem. In order to further increase the resistivity of the steel, elements such as Al, Mn, and the like may be added to produce the best non-oriented electrical steel sheet having excellent magnetic properties.

High-frequency iron loss of 400Hz or higher is important for non-oriented electrical steel sheets used for electric vehicle drive motors, but as the frequency increases, a ratio of eddy current loss in iron loss increases, so that it is advantageous to increase the resistivity and lower the thickness. In order to improve this problem, if the cold reduction ratio is reduced by lowering the thickness of the hot-rolled sheet, the shape of the steel sheet is not sufficiently controlled during the cold rolling process, and the thickness deviation in the width direction increases to cause dimensional defects of a motor core. In addition, since the length of a coil increases as the steel sheet becomes thinner, the working time of the continuous annealing process increases to have a problem of reducing annealing productivity.

In order to solve the problems, in a steelmaking process, attempts have been made to improve magnetic properties by sufficiently removing impurities to make ultra-clean steel or by adding specific elements to reduce inclusions in steel and precipitates, but have limitations in practical application due to limitations in commercial production conditions. In addition, there has been proposed a method of improving the texture by controlling the annealing temperature or atmosphere and controlling the strain rate of the steel sheet during rolling, but a technology to be actually used is extremely limited due to increased manufacturing costs, decreased productivity, and lack of effectiveness.

**[Disclosure]**

**[Technical Problem]**

The present invention attempts to provide a non-oriented electrical steel sheet and a method for manufacturing the same. Specifically, one embodiment of the present invention relates to a non-oriented electrical steel sheet with improved magnetic properties by appropriately adjusting the contents of Sb, Sn, Cu, Cr, and Mg, and a method for manufacturing the same.

**[Technical Solution]**

non-oriented electrical steel sheet according to one embodiment of the present invention includes, by weight%, Si: 3.0 to 4.0%, Al: 0.3 to 1.5%, Mn: 0.1 to 0.6%, at least one from among Sn and Sb: 0.006 to 0.1%, C: 0.0015 to 0.0040%, Cr: 0.01 to 0.03%, Cu: 0.003 to 0.008%, Mg: 0.0005 to 0.0025%, and a balance of Fe and inevitable impurities.
The non-oriented electrical steel sheet according to one embodiment of the present invention may satisfy Equation 1 below.

## [Equation 1]

$$0.66 \leq ([Sn]+[Sb])/([Cr]+[Cu]+[Mg]) \leq 2$$

(In Equation 1, [Sn], [Sb], [Cr], [Cu], and [Mg] represent the contents (weight%) of Sn, Sb, Cr, Cu, and Mg, respectively.)
The non-oriented electrical steel sheet according to one embodiment of the present invention may further include 0.0003 to 0.0030 weight% of at least one of N, S, Ti, Nb and V, respectively.
The non-oriented electrical steel sheet according to one embodiment of the present invention may further include at least one of P: 0.005 to 0.05 weight%, Mo: 0.001 to 0.01 weight% and Ni: 0.005 to 0.04 weight%.
The non-oriented electrical steel sheet according to one embodiment of the present invention may have an average grain size of 55 to 75 μm.
In the non-oriented electrical steel sheet according to one embodiment of the present invention, an oxide layer may be present from the surface to the inside of the steel sheet, and the thickness of the oxide layer may be 10 to 50 nm.
The oxide layer may include 1.0 to 30 weight% of Al and 0.5 to 10.0 weight% of Si.
The weight ratio of the Al content to the Si content in the oxide layer may be 5 to 20.
The distribution density of AlN precipitates having a diameter of 10 to 500 nm at a depth of 2 μm or less from the surface to the inside of the steel sheet may be 3 number/mm$^2$ or less.
The thickness of the steel sheet may be 0.10 to 0.35 mm.
A method for manufacturing a non-oriented electrical steel sheet according to one embodiment of the present invention includes preparing a hot-rolled sheet by hot-rolling a slab including, by weight%, Si: 3.0 to 4.0%, Al: 0.3 to 1.5%, Mn: 0.1 to 0.6%, at least one from among Sn and Sb: 0.006 to 0.1%, C: 0.0015 to 0.0040%, Cr: 0.01 to 0.03%, Cu: 0.003 to 0.008%, Mg: 0.0005 to 0.0025%, and a balance of Fe and inevitable impurities and satisfying Equation 1 below; preparing a cold-rolled sheet by cold-rolling the hot-rolled sheet; and final annealing the cold-rolled sheet.

## [Equation 1]

$$0.66 \leq ([Sn]+[Sb])/([Cr]+[Cu]+[Mg]) \leq 2$$

(In Equation 1, [Sn], [Sb], [Cr], [Cu], and [Mg] represent the contents (weight%) of Sn, Sb, Cr, Cu, and Mg, respectively.)
The method may further include heating the slab to 1200°C or less before the preparing of the hot-rolled sheet.
In the preparing of the hot-rolled sheet, the finish rolling temperature may be 800°C or higher.
The method may further include annealing the hot-rolled sheet at 850 to 1150°C, after the preparing of the hot-rolled sheet.
The final annealing step may be performed by maintaining the cold-rolled sheet at a cracking temperature of 900°C or more for 15 seconds or more.

In the final annealing step, the cold-rolled sheet may be annealed under an atmosphere containing 40 volume% or less of hydrogen ($H_2$) and 60 volume% or more of nitrogen and having a dew point of 0 to - 40°C.

**[Advantageous Effects]**

According to one embodiment of the present invention, it is possible to contribute to improving the performance eco-friendly vehicle drive motors using the best non-oriented electrical steel sheet by providing a non-oriented electrical steel sheet with excellent high-frequency iron loss.

**[Description of the Drawings]**

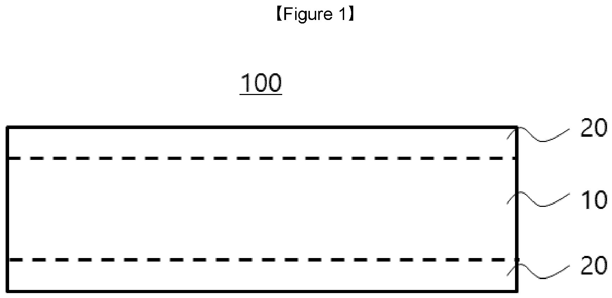

FIG. 1 is a schematic diagram of a cross section of a non-oriented electrical steel sheet according to one embodiment of the present invention.

**[Mode for Invention]**

Terms such as first, second and third are used to describe various parts, components, regions, layers and/or sections, but are not limited thereto. These terms are only used to distinguish one part, component, region, layer or section from another part, component, region, layer or section. Accordingly, a first part, component, region, layer or section to be described below may be referred to as a second part, component, region, layer or section without departing from the scope of the present invention.

The terms used herein is for the purpose of describing specific exemplary embodiments only and are not intended to be limiting of the present invention. The singular forms used herein include plural forms as well, if the phrases do not clearly have the opposite meaning. The "comprising" used in the specification means that a specific feature, region, integer, step, operation, element and/or component is embodied and other specific features, regions, integers, steps, operations, elements, components, and/or groups are not excluded.

When a part is referred to as being "above" or "on" the other part, the part may be directly above or on the other part or may be followed by another part therebetween. In contrast, when a part is referred to as being "directly on" the other part, there is no intervening part therebetween.

In addition, unless otherwise specified, % means weight%, and 1 ppm is 0.0001 weight%.

In one embodiment of the present invention, the meaning of further including an additional element means replacing and including iron (Fe), which is the balance of by an additional amount of an additional element.

Unless defined otherwise, all terms including technical and scientific terms used herein have the same meaning as commonly understood by those skilled in the art to which the present invention belongs. Commonly used predefined terms are further interpreted as having a meaning consistent with the relevant technical literature and the present invention, and are not to be construed as ideal or very formal meanings unless defined otherwise.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

A non-oriented electrical steel sheet according to one embodiment of the present invention includes, by weight%, Si: 3.0 to 4.0%, Al: 0.3 to 1.5%, Mn: 0.1 to 0.6%, at least one from among Sn and Sb: 0.006 to 0.1%, C: 0.0015 to 0.0040%, Cr: 0.01 to 0.03%, Cu: 0.003 to 0.008%, Mg: 0.0005 to 0.0025%, and a balance of Fe and inevitable impurities.

Hereinafter, a reason for limiting the components of the non-oriented electrical steel sheet will be described.

Si: 3.0 to 4.0 weight%

Silicon (Si) serves to lower iron loss by increasing the resistivity of a material. If too little Si is added, an effect of improving iron loss may be insufficient. When too much Si is added, brittleness of the material is increased so that rolling productivity is rapidly decreased, and an oxide layer and an oxide in the surface layer that are harmful to magnetic properties are formed. Accordingly, Si may be included in an amount of 3.0 to 4.0 weight%. More specifically, Si may be included in an amount of 3.1 to 3.8 weight%.

Al: 0.3 to 1.5 weight%

Aluminum (Al) serves to lower iron loss by increasing the resistivity of a material. If too little Al is added, it may be difficult to obtain a magnetic property improvement effect because fine nitrides are formed, or a surface oxide layer is not formed densely. If too much Al is added, nitride is excessively formed to deteriorate magnetic properties and cause problems in all processes such as steelmaking and continuous casting, thereby greatly reducing productivity. Accordingly, Al may be included in an amount of 0.30 to 1.50 weight%. More specifically, Al may be included in an amount of 0.40 to 1.30 weight%.

Mn: 0.1 to 0.6 weight%

Manganese (Mn) serves to increase the resistivity of the material to improve iron loss and form sulfides. If too little Mn is added, sulfide is formed finely to cause deterioration of magnetic properties, and if too much Mn is added, fine MnS is excessively precipitated and the formation of a {111} texture against magnetic properties is made, resulting in a rapid decrease in magnetic flux density. Accordingly, Mn may be included in an amount of 0.1 to 0.6 weight%. More specifically, Mn may be included in an amount of 0.2 to 0.5 weight%.

At least one of Sn and Sb: 0.006 to 0.100 weight%

Tin (Sn) and antimony (Sb) serve to segregate on the surface and grain boundaries of the steel sheet to suppress surface oxidation during annealing, hinder the diffusion of elements through grain boundaries, and hinder recrystallization of {111}//ND orientation, thereby improving the texture. If too little Sn and Sb are added, the aforementioned effect may not be sufficient. When too much Sn and Sb are added, toughness is lowered due to an increase in grain boundary segregation, and thus, productivity may be lowered compared to magnetic improvement. Accordingly, at least one of Sn and Sb may be included in an amount of 0.006 to 0.100 weight%. More specifically, at least one of Sn and Sb may be included in an amount of 0.010 to 0.070 weight%. The at least one of Sn and Sb means the content of Sn or Sb alone when Sn or Sb is included alone, and the total amount of Sn and Sb when Sn and Sb are included simultaneously.

C: 0.0015 to 0.0040 weight%

Carbon (C) causes magnetic aging and is combined with other impurity elements to form carbides, thereby causing magnetic properties, and thus, it is preferred that the content of carbon (C) is lower. However, in one embodiment of the present invention, even if a certain amount or more of carbon (C) is included with an appropriate amount of Cr, Cu, and Mg, the magnetic properties are good. Accordingly, carbon (C) may be included in an amount of 0.0015 weight% or more. Accordingly, C may be included in an amount of 0.0015 to 0.0040 weight%. More specifically, C may be included in an amount of 0.0020 to 0.0035 weight%.

Cr: 0.0100 to 0.0300 weight%

Although chromium (Cr) does not have a strong tendency to form fine precipitates, chromium (Cr) may impede the formation of an Al-based oxide layer on the surface layer and form Cr-based carbides to deteriorate magnetic properties. If too little Cr is added, the Al oxide layer may be formed too thick or a round oxide or nitride may be formed on the surface to deteriorate magnetic properties, and if too much Cr is added, it is difficult to form a dense oxide layer so that the magnetic properties may be deteriorated. Accordingly, Cr may be included in an amount of 0.0100 to 0.0300 weight%. More specifically, Cr may be included in an amount of 0.0120 to 0.0275 weight%.

Cu: 0.0030 to 0.0080 weight%

Copper (Cu) is an element capable of forming sulfides at high temperatures, and an element that also affects a composition of the oxide layer on the surface when added in a large amount. When an appropriate amount of Cu is added, fine-sized CuS or MnCuS precipitates are coarsened to improve magnetic properties. Accordingly, Cu may be included in an amount of 0.0030 to 0.0080 weight%. More specifically, Cu may be included in an amount of 0.0040 to 0.0077 weight%.

Mg: 0.0005 to 0.0025 weight%

Magnesium (Mg) is an element that mainly binds to S to form a sulfide and may affect the oxide layer on the surface of base iron. Accordingly, Mg may be included in an amount of 0.0005 to 0.0025 weight%. More specifically, Mg may be included in an amount of 0.0008 to 0.0020 weight%.

The non-oriented electrical steel sheet according to one embodiment of the present invention may satisfy Equation 1 below.

[Equation 1]

$$0.66 \leq ([Sn]+[Sb])/([Cr]+[Cu]+[Mg]) \leq 2.00$$

More specifically, the values of Equation 1 may be 0.68 to 1.95.

The non-oriented electrical steel sheet according to one embodiment of the present invention may further include 0.0003 to 0.0030 weight% of at least one from among N, S, Ti, Nb and V, respectively.

N: 0.0003 to 0.0030 weight%

Nitrogen (N) not only forms fine AlN precipitates inside a base material, but also forms fine precipitates in combination with other impurities to inhibit grain growth, thereby deteriorating iron loss, and thus, it is preferred that the content of nitrogen (N) is lower, and the content of nitrogen (N) may be 0.0003 to 0.0030 weight%. More preferably, the content of nitrogen (N) may be managed to 0.0005 to 0.0025 weight%.

S: 0.0003 to 0.0030 weight%

Sulfur (S) forms fine precipitates such as MnS, CuS, and (Mn, Cu)S to deteriorate magnetic properties and hot workability, and thus, it is preferable to be managed at a low level. Accordingly, when S is further included, S may be included in an amount of 0.0003 to 0.0030 weight%. More specifically, S may be included in an amount of 0.0005 to 0.0025 weight%.

Ti: 0.0003 to 0.0030 weight%

Titanium (Ti) has a very strong tendency to form precipitates in steel, and forms fine carbides, nitrides, or sulfides inside the base material to suppress grain growth, thereby deteriorating iron loss. Therefore, the Ti content needs to be managed to 0.004% or less, more preferably 0.002% or less.

Nb: 0.0003 to 0.0030 weight%

Niobium (Nb) forms fine carbides or nitrides inside the base material to suppress grain growth and domain wall motion, thereby deteriorating iron loss. Accordingly, the Nb content needs to be managed to 0.004% or less, more preferably 0.002% or less.

V: 0.0003 to 0.0030 weight%

Vanadium (V) forms fine carbides or nitrides inside the base material to suppress grain growth and domain wall motion, thereby deteriorating iron loss. Therefore, the V content needs to be managed to 0.004% or less, more preferably 0.002% or less.

The non-oriented electrical steel sheet according to one embodiment of the present invention may further include at least one of P: 0.005 to 0.05 weight%, Mo: 0.001 to 0.01 weight% and Ni: 0.005 to 0.04 weight%.

P: 0.005 to 0.050 weight%

Phosphorus (P) serves to segregate on the surface and grain boundaries of the steel sheet to suppress surface oxidation during annealing, hinder the diffusion of elements through grain boundaries, and hinder recrystallization of {111}//ND orientation, thereby improving the texture. If too little P is added, the effect may not be sufficient. If too much P is added, hot working properties may be deteriorated, and thus productivity may be lowered compared to magnetic improvement. Accordingly, when P is further included, P may be included in an amount of 0.005 to 0.050 weight%. More specifically, P may be further included in an amount of 0.007 to 0.045 weight%.

Mo: 0.001 to 0.01 weight%

Molybdenum (Mo) serves to improve the texture by segregating on the surface and grain boundaries. If too little Mo is added, a {111} texture develops, and magnetic properties may deteriorate. When too much Mo is added, the segregation of Sn and P may be suppressed, and the texture improvement effect may be reduced. Accordingly, when Mo is further included, Mo may be included in an amount of in an amount of 0.001 to 0.01 weight%.

Ni: 0.005 to 0.04 weight%

Nickel (Ni) serves to increase the ductility of steel and promote the segregation of Sn and P. If too much Ni is added, the magnetic flux density may rapidly decrease. Accordingly, when Ni is further included, Ni may be included in an amount of 0.005 to 0.04 weight%.

The balance includes Fe and inevitable impurities. The inevitable impurities are impurities to be added during the steelmaking step and the manufacturing process of the oriented electrical steel sheet, and since the unavoidable impurities are well known in the art, a detailed description thereof will be omitted. In one embodiment of the present invention, the addition of elements other than the above-described alloy components is not excluded and may be variously included within a range without impairing the technical spirit of the present invention. Additional elements are further included by replacing the balance of Fe.

The inevitable impurities may include, for example, B, Zr, and the like, and may be managed to B: 0.002 weight% or less and Zr: 0.005 weight% or less.

FIG. 1 illustrates a cross section of a non-oriented electrical steel sheet according to one embodiment of the present invention. As shown in FIG. 1, an oxide layer 20 exists from the surface to the inside of an electrical steel sheet 100. The electrical steel sheet 100 excluding the oxide layer 20 is classified into an electrical steel sheet base material 10.

As the electrical steel sheet 100 is exposed to oxygen in the manufacturing process, oxygen in the atmosphere may permeate into the steel sheet, and an oxygen concentration gradient may exist from the surface to the inside.

The oxide layer 20 and the base material 10 may be divided into the oxide layer 20 having an oxygen content of 40 weight % or more and the base material 10 having an oxygen content of less than 40 weight%. The thickness of the oxide layer 20 divided in this way may be 10 to 50 nm. The oxide layer 20 having an appropriate thickness is formed as described above to prevent nitrogen in the atmosphere during annealing from diffusing into the base material and suppress the formation of fine nitrides, thereby improving magnetic properties. The thickness of the oxide layer 20 may vary through the entire surface of the steel sheet, and in one embodiment of the present invention, the thickness of the oxide layer 20 means an average thickness within the steel sheet.

This oxide layer 20 contains a large amount of concentrated Al diffused from the base material 10 in addition to oxygen that exists due to the penetration of oxygen in the manufacturing process. On the other hand, due to the increase of Al and O, the Si content may be relatively decreased.

Specifically, the oxide layer 20 may include 1.0 to 30 weight% of Al and 0.5 to 10.0 weight% of Si. More specifically, the oxide layer 20 may include O: 40 to 70 weight%, Al: 1 to 30 weight%, Si: 0.5 to 10.0 weight%, and the balance of Fe and inevitable impurities. As such, the Al-enriched oxide layer is formed to suppress the formation of round-shaped oxides or fine nitrides in the base material, thereby improving magnetic properties. Similarly to O, in the case of Al, there may be a concentration gradient in which the content increases in the direction from the base material to the surface, and the above range means the average content in the oxide layer 20.

The weight ratio of the Al content to the Si content in the oxide layer 20 may be 5 to 20. As such, when the amount of Al in the oxide layer 20 increases, a dense oxide layer is formed to suppress the formation of fine precipitates below the surface layer that may occur during the final annealing process, thereby obtaining excellent magnetic properties. More specifically, the weight ratio of the Al content to the Si content in the oxide layer 20 may be 7.0 to 17.0.

The non-oriented electrical steel sheet according to one embodiment of the present invention has an average grain size of 55 to 75 $\mu$m. In the above range, the magnetic properties of the non-oriented electrical steel sheet are more excellent. The grain size is calculated as (measurement area $\div$ grain number)$^{0.5}$. The grain size may be measured based on a plane parallel to a rolling plane (ND plane) and may be measured within the base material 10. Specifically, the average grain size may be 60 to 70 $\mu$m.

In one embodiment of the present invention, the density of AlN precipitates on the surface portion may be reduced by appropriately controlling the alloy components. Specifically, the distribution density of AlN precipitates having a diameter of 10 to 500 nm at a depth within 2 $\mu$m from the surface to the inside of the steel sheet may be 3 number/mm$^2$ or less. As such, by lowering the distribution density of AlN inclusions, it is possible to contribute to improving magnetic properties by suppressing fine precipitates that hinder domain wall motion. More specifically, the distribution density of AlN precipitates may be 0.5 to 2.5 number/mm$^2$. In this case, the diameter of AlN may be measured based on a surface parallel to the rolling plane (ND plane). The diameter of AlN may be obtained as the diameter of a circle assuming a circle having the same area as AlN.

The thickness of the steel sheet may be 0.10 to 0.35 mm.

As described above, in one embodiment of the present invention, it is possible to improve magnetic properties by presenting an optimal alloy composition and improving the characteristics of the precipitates. Specifically, the iron loss ($W_{10/400}$) of the non-oriented electrical steel sheet may be 12.5 W/kg or less, and the magnetic flux density ($B_{50}$) may be 1.650 T or more. The iron loss ($W_{10/400}$) is the iron loss when the magnetic flux density of 1.0 T is left at a frequency of 400HZ. The magnetic flux density ($B_{50}$) is a magnetic flux density induced in a magnetic field of 5000 A/m. More specifically, the iron loss ($W_{10/400}$) of the non-oriented electrical steel sheet may be 11.6 W/kg or less, and the magnetic flux density ($B_{50}$) may be 1.660 T or more.

A method of manufacturing a non-oriented electrical steel sheet according to one embodiment of the present invention includes preparing a hot-rolled sheet by hot-rolling a slab; preparing a cold-rolled sheet by cold-rolling the hot-rolled sheet; and final annealing the cold-rolled sheet.

First, the slab is hot-rolled.

Since the alloy components of the slab have been described in the alloy components of the aforementioned non-oriented electrical steel sheet, duplicated descriptions will be omitted. Since the alloy components are not substantially changed during the manufacturing process of the non-oriented electrical steel sheet, the alloy components of the non-oriented electrical steel sheet and the slab are substantially the same as each other.

Specifically, the slab includes, by weight%, Si: 3.0 to 4.0%, Al: 0.3 to 1.5%, Mn: 0.1 to 0.6%, at least one from among Sn and Sb: 0.006 to 0.1%, C: 0.0015 to 0.0040%, Cr: 0.01 to 0.03%, Cu: 0.003 to 0.008%, Mg: 0.0005 to 0.0025%, and a balance of Fe and inevitable impurities, and may satisfy the following Equation 1.

Since additional elements have been described in the alloy components of the aforementioned non-oriented electrical steel sheet, duplicated descriptions will be omitted.

The slab may be heated before hot rolling. The heating temperature of the slab is not limited, but the slab may be heated to 1200°C or less. If the heating temperature of the is too high, precipitates such as AlN and MnS present in the slab are re-dissolved and then finely precipitated during hot rolling and annealing to suppress the grain growth and reduce the magnetic properties.

Next, the hot-rolled sheet is prepared by hot-rolling the slab. The thickness of the hot-rolled sheet may be 2 to 2.3 mm. In the preparing of the hot-rolled sheet, the finish rolling temperature may be 800°C or higher. Specifically, the finish rolling temperature may be 800°C to 1000°C. The hot-rolled sheet may be wound at a temperature of 700°C or lower.

After the preparing of the hot-rolled sheet, the annealing of the hot-rolled sheet may be further included. In this case, the annealing temperature of the hot-rolled sheet may be 850 to 1150°C. If the annealing temperature of the hot-rolled sheet is too low, the structure does not grow or grows finely, so that it is not easy to obtain a texture favorable to magnetic properties during annealing after cold rolling. If the annealing temperature is too high, self-crystal grains may grow excessively and surface defects of the sheet may become excessive. The annealing of the hot-rolled sheet is performed to increase orientation favorable to magnetic properties, if necessary, and can be omitted. The annealed hot-rolled sheet may be pickled.

Next, the hot-rolled sheet is cold-rolled to prepare the cold-rolled sheet. The cold rolling is final rolling to a thickness of 0.1 mm to 0.35 mm. In the cold rolling step, the reduction ratio may be adjusted to 85% or more. More specifically, the reduction ratio may be 85 to 95%. If the reduction ratio is too low, a thickness difference in the width direction of the steel sheet may occur.

Next, the cold-rolled sheet is subjected to final annealing. The cold-rolled sheet may be annealed by maintaining the cold-rolled sheet at a cracking temperature of 900°C or more for 15 seconds or more. Since the iron loss of the non-oriented electrical steel sheet is closely related to the grain size, the cold-rolled sheet may be annealed at appropriate temperature and time. More specifically, the cold-rolled sheet may be annealed for 30 to 150 seconds at the cracking temperature of 950 to 1100°C.

In the final annealing step, the cold-rolled sheet may be annealed under an atmosphere containing 40 volume% or less of hydrogen ($H_2$) and 60 volume% or more of nitrogen and having a dew point of 0 to - 40°C. Specifically, the annealing may be performed in an atmosphere containing 5 to 40 volume% of hydrogen and 60 to 95 volume% of nitrogen. In the final annealing process, the average grain size may be 55 to 75 $\mu$m, and all (i.e., 99% or more) of the processed structure formed in the previous cold rolling step may be recrystallized.

After final annealing, an insulating film may be formed. The insulating film may be treated with organic, inorganic, and organic/inorganic composite films, and may be treated with other insulating films.

Hereinafter, the present invention will be described in more detail with reference to the following Examples. However, these Examples are only for exemplifying the present invention, and the present invention is not limited thereto.

Example 1

A slab was prepared from Tables 1 and 2 and components including the balance of Fe and inevitable impurities. The slab was heated at 1150°C and hot-rolled at a finishing temperature of 830°C to prepare a hot-rolled sheet having a thickness of 2.3 mm. The hot-rolled sheet was annealed at 1030°C for 100 seconds, then cold-rolled to a thickness of 0.27 mm and subjected to recrystallization annealing at 950°C for 88 seconds.

Table 3 showed the thickness of the oxide layer, the contents of Al and Si in the oxide layer, the distribution density of AlN in the surface layer, W10/400 iron loss, and B50 magnetic flux density for each specimen.

The thickness of the oxide layer was represented as an average value obtained by preparing a smooth section by processing the specimen with FIB, and photographing the smooth section at high magnification by TEM, and measuring the thickness of the oxide layer at 10 or more points on the surface layer of the base material.

The AIN was summarized in Table 3 by grinding the surface of the steel sheet to a thickness of 1 μm and measuring the number of AIN for an area of 2500 μm$^2$ or more by taking a high-magnification TEM image.

For magnetic properties such as magnetic flux density and iron loss, 60 mm wide × 60 mm long × 5 sheets of specimens were cut, respectively, and rolling direction and rolling vertical direction were measured with a single sheet tester, and the average values were shown. In this case, W10/400 was the iron loss when a magnetic flux density of 1.0 T was left at a frequency of 400Hz, and B50 meant the magnetic flux density induced in a magnetic field of 5000A/m.

(Table 1)

| Specimen No. | Si[%] | Al[%] | Mn[%] | Sn[ppm] | Sb[ppm] | C[ppm] | Cr[ppm] | Cu[ppm] | Mg[ppm] |
|---|---|---|---|---|---|---|---|---|---|
| A1 | 3.1 | 1.3 | 0.5 | 231 | 21 | 28 | 73 | 53 | 23 |
| A2 | 3.1 | 1.3 | 0.5 | 35 | 463 | 28 | 251 | 77 | 2 |
| A3 | 3.1 | 1.3 | 0.5 | 37 | 428 | 26 | 128 | 69 | 14 |
| A4 | 3.1 | 1.3 | 0.5 | 596 | 48 | 27 | 273 | 56 | 8 |
| B1 | 3.4 | 0.95 | 0.3 | 372 | 879 | 23 | 256 | 70 | 19 |
| B2 | 3.4 | 0.95 | 0.3 | 146 | 37 | 35 | 114 | 76 | 15 |
| B3 | 3.4 | 0.95 | 0.3 | 98 | 85 | 35 | 286 | 77 | 21 |
| B4 | 3.4 | 0.95 | 0.3 | 240 | 310 | 34 | 245 | 40 | 8 |
| C1 | 3.6 | 0.75 | 0.2 | 281 | 173 | 30 | 225 | 104 | 14 |
| C2 | 3.6 | 0.75 | 0.2 | 21 | 27 | 21 | 109 | 36 | 8 |
| C3 | 3.6 | 0.75 | 0.2 | 237 | 292 | 29 | 247 | 57 | 14 |
| C4 | 3.6 | 0.75 | 0.2 | 69 | 77 | 21 | 127 | 66 | 19 |
| D1 | 3.8 | 0.4 | 0.3 | 126 | 118 | 22 | 159 | 17 | 13 |
| D2 | 3.8 | 0.4 | 0.3 | 291 | 84 | 22 | 354 | 58 | 18 |
| D3 | 3.8 | 0.4 | 0.3 | 75 | 330 | 23 | 124 | 77 | 9 |
| D4 | 3.8 | 0.4 | 0.3 | 380 | 120 | 24 | 189 | 64 | 18 |
| D5 | 3.8 | 0.01 | 0.3 | 380 | 120 | 24 | 189 | 64 | 18 |

(Table 2)

| Specimen No. | N[ppm] | S[ppm] | Ti[ppm] | Nb[ppm] | V[ppm] | [Sn]+[Sb] [%] | ([Sn]+[Sb])/([Cr]+[Cu]+[Mg]) |
|---|---|---|---|---|---|---|---|
| A1 | 16 | 19 | 11 | 19 | 15 | 0.0252 | 1.69 |
| A2 | 13 | 9 | 23 | 17 | 21 | 0.0498 | 1.51 |
| A3 | 18 | 14 | 24 | 8 | 19 | 0.0465 | 2.2 |
| A4 | 17 | 16 | 17 | 18 | 10 | 0.0644 | 1.91 |
| B1 | 14 | 18 | 12 | 11 | 23 | 0.1251 | 3.63 |
| B2 | 15 | 18 | 9 | 13 | 9 | 0.0183 | 0.89 |
| B3 | 9 | 17 | 24 | 19 | 10 | 0.0183 | 0.48 |
| B4 | 12 | 15 | 14 | 20 | 21 | 0.0550 | 1.88 |
| C1 | 9 | 14 | 24 | 19 | 20 | 0.0454 | 1.32 |
| C2 | 11 | 17 | 21 | 23 | 16 | 0.0048 | 0.31 |
| C3 | 12 | 20 | 23 | 14 | 12 | 0.0529 | 1.66 |

(continued)

| Speci men No. | N[ppm] | S[ppm] | Ti[ppm] | Nb[ppm] | V[ppm] | [Sn]+[Sb] [%] | ([Sn]+[Sb])/([Cr]+[Cu]+[Mg]) |
|---|---|---|---|---|---|---|---|
| C4 | 8 | 14 | 17 | 18 | 18 | 0.0146 | 0.69 |
| D1 | 8 | 21 | 18 | 9 | 23 | 0.0244 | 1.29 |
| D2 | 11 | 12 | 12 | 16 | 11 | 0.0375 | 0.87 |
| D3 | 10 | 13 | 12 | 21 | 13 | 0.0405 | 1.93 |
| D4 | 20 | 20 | 10 | 9 | 24 | 0.0500 | 1.85 |
| D5 | 20 | 20 | 10 | 9 | 24 | 0.0500 | 1.85 |

(Table 3)

| Specimen No. | Al in oxide layer | Si in oxide layer | In oxide layer | Thickness of oxide layer | AlN distribution density of surface layer [number/ mm²] | W10/400 | B50 | Note |
|---|---|---|---|---|---|---|---|---|
| | [%] | [%] | [Al]/ [Si] | [nm] | | [W/kg] | [T] | |
| A1 | 23 | 1.4 | 16.4 | 70 | 4.2 | 13.1 | 1.652 | Comparative Example |
| A2 | 22 | 6.4 | 3.4 | 40 | 9.5 | 13.1 | 1.65 | Comparative Example |
| A3 | 21 | 7.2 | 2.9 | 35 | 5.9 | 12.8 | 1.652 | Comparative Example |
| A4 | 29 | 2.6 | 11.2 | 25 | 1.8 | 11.1 | 1.661 | Inventive Example |
| B1 | 24 | 5.7 | 4.2 | 5 | 7.1 | 13 | 1.658 | Comparative Example |
| B2 | 22 | 0.8 | 27.5 | 20 | 6.3 | 13.1 | 1.654 | Comparative Example |
| B3 | 27 | 1.2 | 22.5 | 25 | 4.8 | 12.9 | 1.655 | Comparative Example |
| B4 | 22 | 2.8 | 7.9 | 35 | 1.2 | 11.5 | 1.667 | Inventive Example |
| C1 | 27 | 1.1 | 24.5 | 20 | 6.5 | 13.2 | 1.664 | Comparative Example |
| C2 | 29 | 1.3 | 22.3 | 65 | 8.6 | 13.3 | 1.663 | Comparative Example |
| C3 | 23 | 1.5 | 15.3 | 20 | 1.6 | 11.4 | 1.671 | Inventive Example |

(continued)

| Specimen No. | Al in oxide layer | Si in oxide layer | In oxide layer | Thickness of oxide layer | AlN distribution density of surface layer [number/mm²] | W10/400 | B50 | Note |
|---|---|---|---|---|---|---|---|---|
| | [%] | [%] | [Al]/[Si] | [nm] | | [W/kg] | [T] | |
| C4 | 24 | 2.3 | 10.4 | 15 | 2.1 | 11.5 | 1.672 | Inventive Example |
| D1 | 25 | 7.1 | 3.5 | 40 | 5.6 | 13.2 | 1.664 | Comparative Example |
| D2 | 28 | 2.3 | 12.2 | 5 | 4 | 13.3 | 1.664 | Comparative Example |
| D3 | 27 | 2.7 | 10 | 20 | 0.8 | 11.3 | 1.673 | Inventive Example |
| D4 | 23 | 3.2 | 7.2 | 30 | 1.3 | 11.6 | 1.672 | Inventive Example |
| D5 | 0.7 | 28 | 0.025 | 8 | 11.3 | 13.5 | 1.654 | Comparative Example |

As shown in Tables 1 to 3, in the case of A4, B4, C3, C4, D3, and D4 in which the alloy components are properly controlled, it can be confirmed that an oxide layer is properly formed and a small amount of AlN is formed, so that the magnetic properties are excellent.

On the other hand, since A1 contains too little Cr, it can be confirmed that an oxide layer is not properly formed, and a large amount of AlN is formed, so that the magnetic properties are degraded.

Since A2 contains too little Mg, it can be confirmed that an oxide layer is not properly formed, and a large amount of AlN is formed, so that the magnetic properties are degraded.

Since A3 has a too large value of Equation 1, it can be confirmed that an oxide layer is not properly formed, and a large amount of AlN is formed, so that the magnetic properties are degraded.

Since B1 includes a large amount of Sn and Sb, it can be confirmed that the value of Equation 1 is too large, an oxide layer is not properly formed, and a large amount of AlN is formed, so that the magnetic properties are degraded.

Since B2 contains a large amount of Mg, it can be confirmed that an oxide layer is not properly formed, and a large amount of AlN is formed, so that the magnetic properties are degraded.

Since B3 has a too small value of Equation 1, it can be confirmed that an oxide layer is not properly formed, and a large amount of AlN is formed, so that the magnetic properties are degraded.

Since C1 contains a large amount of Cu, it can be confirmed that an oxide layer is not properly formed, and a large amount of AlN is formed, so that the magnetic properties are degraded.

Since C2 includes a small amount of Sn and Sb, it can be confirmed that the value of Equation 1 is too small, an oxide layer is not properly formed, and a large amount of AlN is formed, so that the magnetic properties are degraded.

Since D1 contains too little Cu, it can be confirmed that an oxide layer is not properly formed, and a large amount of AlN is formed, so that the magnetic properties are degraded.

Since D2 contains too much Cr, it can be confirmed that an oxide layer is not properly formed, and a large amount of AlN is formed, so that the magnetic properties are degraded.

Since D5 contains too little Al, it can be confirmed that an oxide layer is not properly formed, and the magnetic properties are degraded.

The present invention can be manufactured in various different forms, not limited to the exemplary embodiments, and it will be appreciated to those skilled in the art that the present invention may be implemented in other specific forms without changing the technical idea or essential features of the present invention. Therefore, it should be appreciated that the exemplary embodiments described above are illustrative in all aspects and are not restricted.

[Explanation of Reference Numerals and Symbols]

| 100: | Non-oriented electrical steel sheet | 10: | Base material |
| 20: | Oxide layer | | |

Claims

1. A non-oriented electrical steel sheet comprising, by weight%, Si: 3.0 to 4.0%, Al: 0.3to 1.5%, Mn: 0.1 to 0.6%, at least one from among Sn and Sb: 0.006 to 0.1%, C: 0.0015 to 0.0040%, Cr: 0.01 to 0.03%, Cu: 0.003 to 0.008%, Mg: 0.0005 to 0.0025%, and a balance of Fe and inevitable impurities, and satisfying Equation 1 below.

[Equation 1]

$$0.66 \leq ([Sn]+[Sb])/([Cr]+[Cu]+[Mg]) \leq 2$$

(In Equation 1, [Sn], [Sb], [Cr], [Cu], and [Mg] represent the contents (weight%) of Sn, Sb, Cr, Cu, and Mg, respectively.)

2. The non-oriented electrical steel sheet of claim 1, further comprising:
0.0003 to 0.0030 weight% of at least one of N, S, Ti, Nb and V, respectively.

3. The non-oriented electrical steel sheet of claim 1, further comprising:
at least one of P: 0.005 to 0.05 weight%, Mo: 0.001 to 0.01 weight% and Ni: 0.005 to 0.04 weight%.

4. The non-oriented electrical steel sheet of claim 1, wherein
an average grain size is 55 to 75 $\mu$m.

5. The non-oriented electrical steel sheet of claim 1, wherein
an oxide layer is present from the surface to the inside of the steel sheet, and the thickness of the oxide layer is 10 to 50 nm.

6. The non-oriented electrical steel sheet of claim 5, wherein
the oxide layer includes 1.0 to 30 weight% of Al and 0.5 to 10.0 weight% of Si.

7. The non-oriented electrical steel sheet of claim 5, wherein
a weight ratio of the Al content to the Si content in the oxide layer is 5 to 20.

8. The non-oriented electrical steel sheet of claim 1, wherein
the distribution density of AlN precipitates having a diameter of 10 to 500 nm at a depth of 2 $\mu$m or less from the surface to the inside of the steel sheet is 3 number/mm$^2$ or less.

9. The non-oriented electrical steel sheet of claim 1, wherein
the thickness is 0.10 to 0.35 mm.

10. A method for manufacturing a non-oriented electrical steel sheet comprising:

preparing a hot-rolled sheet by hot-rolling a slab comprising, by weight%, Si: 3.0 to 4.0%, Al: 0.3 to 1.5%, Mn: 0.1 to 0.6%, at least one from among Sn and Sb: 0.006 to 0.1 %, C: 0.0015 to 0.0040%, Cr: 0.01 to 0.03%, Cu: 0.003 to 0.008%, Mg: 0.0005 to 0.0025%, and a balance of Fe and inevitable impurities and satisfying Equation 1 below;
preparing a cold-rolled sheet by cold-rolling the hot-rolled sheet; and
final annealing the cold-rolled sheet.

[Equation 1]

$$0.66 \le ([Sn]+[Sb])/([Cr]+[Cu]+[Mg]) \le 2$$

(In Equation 1, [Sn], [Sb], [Cr], [Cu], and [Mg] represent the contents (weight%) of Sn, Sb, Cr, Cu, and Mg, respectively.)

11. The method for manufacturing the non-oriented electrical steel sheet of claim 10, further comprising: heating the slab to 1200°C or less before the preparing of the hot-rolled sheet.

12. The method for manufacturing the non-oriented electrical steel sheet of claim 10, wherein in the preparing of the hot-rolled sheet, the finish rolling temperature is 800°C or higher.

13. The method for manufacturing the non-oriented electrical steel sheet of claim 10, further comprising: annealing the hot-rolled sheet at 850 to 1150°C, after the preparing of the hot-rolled sheet.

14. The method for manufacturing the non-oriented electrical steel sheet of claim 10, wherein the final annealing step is performed by maintaining the cold-rolled sheet at a cracking temperature of 900°C or more for 15 seconds or more.

15. The method for manufacturing the non-oriented electrical steel sheet of claim 10, wherein in the final annealing step, the cold-rolled sheet is annealed under an atmosphere containing 40 volume% or less of hydrogen ($H_2$) and 60 volume% or more of nitrogen and having a dew point of 0 to - 40°C.

【Figure 1】

100

## INTERNATIONAL SEARCH REPORT

| International application No. |
| --- |
| **PCT/KR2021/019225** |

**A. CLASSIFICATION OF SUBJECT MATTER**

**C22C 38/34**(2006.01)i; **C22C 38/06**(2006.01)i; **C22C 38/20**(2006.01)i; **C22C 38/00**(2006.01)i; **C22C 38/28**(2006.01)i; **C22C 38/26**(2006.01)i; **C22C 38/22**(2006.01)i; **C21D 8/12**(2006.01)i

According to International Patent Classification (IPC) or to both national classification and IPC

**B. FIELDS SEARCHED**

Minimum documentation searched (classification system followed by classification symbols)

C22C 38/34(2006.01); C21D 8/12(2006.01); C21D 9/46(2006.01); C22C 38/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성 전기강판(non-oriented electrical steel sheet), 주석(Sn), 안티몬(Sb), 크롬(Cr), 구리(Cu), 마그네슘(Mg)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2018-0070951 A (POSCO) 27 June 2018 (2018-06-27)<br>See paragraphs [0085] and [0094], claims 1, 6, 8-10 and 12-15, table 5 and figure 1. | 1-11,13-14 |
| Y | | 12,15 |
| Y | KR 10-2019-0078395 A (POSCO) 04 July 2019 (2019-07-04)<br>See claim 13. | 12 |
| Y | KR 10-2019-0078238 A (POSCO) 04 July 2019 (2019-07-04)<br>See claims 1-3. | 15 |
| A | KR 10-2019-0118611 A (JFE STEEL CORPORATION) 18 October 2019 (2019-10-18)<br>See claims 1 and 3. | 1-15 |
| A | KR 10-1999-0039201 A (POHANG IRON & STEEL CO., LTD.) 05 June 1999 (1999-06-05)<br>See claims 1-2. | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **06 April 2022** | **06 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/019225**

| Patent document cited in search report | | | Publication date (day/month/year) | Patent family member(s) | | | Publication date (day/month/year) |
|---|---|---|---|---|---|---|---|
| KR | 10-2018-0070951 | A | 27 June 2018 | CN | 110073021 | A | 30 July 2019 |
| | | | | CN | 110073021 | B | 06 August 2021 |
| | | | | EP | 3556884 | A1 | 23 October 2019 |
| | | | | JP | 2020-509182 | A | 26 March 2020 |
| | | | | JP | 6847226 | B2 | 24 March 2021 |
| | | | | KR | 10-1918720 | B1 | 14 November 2018 |
| | | | | US | 11060162 | B2 | 13 July 2021 |
| | | | | US | 2020-0087748 | A1 | 19 March 2020 |
| | | | | WO | 2018-117602 | A1 | 28 June 2018 |
| KR | 10-2019-0078395 | A | 04 July 2019 | KR | 10-2109241 | B1 | 11 May 2020 |
| | | | | WO | 2019-132315 | A1 | 04 July 2019 |
| KR | 10-2019-0078238 | A | 04 July 2019 | KR | 10-2080174 | B1 | 21 February 2020 |
| KR | 10-2019-0118611 | A | 18 October 2019 | BR | 112019018081 | A2 | 24 March 2020 |
| | | | | CA | 3054114 | A1 | 04 October 2018 |
| | | | | CA | 3054114 | C | 07 September 2021 |
| | | | | CN | 110536971 | A | 03 December 2019 |
| | | | | EP | 3572535 | A1 | 27 November 2019 |
| | | | | JP | 6770260 | B2 | 14 October 2020 |
| | | | | KR | 10-2301751 | B1 | 13 September 2021 |
| | | | | MX | 2019011566 | A | 18 November 2019 |
| | | | | TW | 201837200 | A | 16 October 2018 |
| | | | | TW | I672384 | B | 21 September 2019 |
| | | | | US | 11136645 | B2 | 05 October 2021 |
| | | | | US | 2019-0382867 | A1 | 19 December 2019 |
| | | | | WO | 2018-179871 | A1 | 04 October 2018 |
| KR | 10-1999-0039201 | A | 05 June 1999 | KR | 10-0345701 | B1 | 18 September 2002 |

Form PCT/ISA/210 (patent family annex) (July 2019)